# EUROPÄISCHE PATENTANMELDUNG

(11) **EP 1 512 575 A2**
(43) Veröffentlichungstag der Anmeldung: **09.03.2005**
(21) Anmeldenummer: 04020497.6
(22) Anmeldetag: 28.08.2004
(51) Int. Cl.: B60K 35/00, G01G 19/08

(54) **Beladungsanzeige eines Fahrzeuges**

(30) Priorität: 06.09.2003 DE 10341132
(71) Anmelder: DaimlerChrysler AG, 70567 Stuttgart (DE)
(72) Erfinder: Assmann, Herbert, Dr., 71732 Tamm (DE)

(57) **Zusammenfassung**

Die Erfindung betrifft eine Beladungsanzeige für einen aktuellen Beladungszustand eines Fahrzeuges, wobei für jedes Rad des Fahrzeuges eine aktuelle gewichtsbedingte Radlast im Bereich einer Radaufhängung erfasst wird.

Erfindungsgemäß weist die Beladungsanzeige eine Mehrquadrantendarstellung auf, wobei in jedem Quadranten die aktuelle Radlast für jeweils ein Rad angezeigt ist und die Quadranten entsprechend der Radposition im Fahrzeug angeordnet sind.

## Beschreibung

Die Erfindung betrifft eine Beladungsanzeige für den aktuellen Beladungszustand eines Fahrzeuges gemäß dem Oberbegriff des Patentanspruches 1.

Beim Beladen von Fahrzeugen, insbesondere von Lastkraftwagen beliebiger Größe, lässt sich üblicherweise das zulässige Gesamtgewicht nur dann einhalten, wenn das Gewicht der Zuladung bekannt ist. Da jedoch in vielen Fällen das Gewicht der Zuladung unbekannt ist, kann nur eine grobe Abschätzung des Gesamtgewichtes vorgenommen werden, was häufig dazu führt, dass das zulässige Gesamtgewicht überschritten oder auch nicht erreicht wird, wobei letzteres zur Folge hat, dass Ladekapazität verschenkt wird.

Aus der DE 38 40 112 C1 ist eine Vorrichtung zur Bestimmung des Beladungszustandes von Lastkraftwagen bekannt, deren Fahrzeugrahmen relativ zu den Achsen beweglich und auf diesen durch Federn abgestützt sind, wobei eine den Abstand zwischen dem Fahrzeugrahmen und der oder den Achsen erfassende Einrichtung vorgesehen ist, die ein Signal erzeugt, wenn der Abstand auf ein Maß verringert worden ist, welches dem Gewicht der höchstzulässigen Nutzlast entspricht.

Außerdem wird in der DE 27 21 809 A1 eine Vorrichtung zur Erfassung des Beladungszustandes eines luftgefederten Fahrzeuges beschrieben, bei welcher die Balgdrücke der Luftfedern als Maß für die Beladung des Fahrzeuges ausgewertet werden. Die Balgdrücke werden für eine Vorder- und eine Hinterachse jeweils links und rechts im Räderbereich erfasst. Für jeden zu messenden Druck ist ein Druck-Spannungs-Wandler vorgesehen, wobei die Drücke auch mit einem Druck-Spannungswandler umgewandelt werden können. Die den Drücken proportionalen Spannungssignale werden in einer Auswerteschaltung weiterverarbeitet.

Der Erfindung liegt die Aufgabe zugrunde, eine Beladungsanzeige für den aktuellen Beladungszustand eines Fahrzeuges anzugeben, welche einem Benutzer eine detaillierte Information zur Verfügung stellt, um eine Zuladung fahrdynamisch ausgewogen im Fahrzeug zu verteilen oder sein Fahrverhalten an den aktuellen Beladungszustand geeignet anzupassen.

Erfindungsgemäß weist die Beladungsanzeige eine Mehrquadrantendarstellung auf, wobei in jedem Quadranten die aktuelle Radlast für jeweils ein Rad angezeigt ist und die Quadranten entsprechend der Radposition im Fahrzeug angeordnet sind. Die Beladungsanzeige zeigt den aktuellen Beladungszustand des Fahrzeuges an. Hierfür wird für jedes Rad des Fahrzeuges eine aktuelle gewichtsbedingte Radlast im Bereich der jeweiligen Radaufhängung erfasst. Ein Fahrer des Fahrzeuges oder eine Person, welche für eine Beladung des Fahrzeuges zuständig ist, erhält somit während der Beladung des Fahrzeuges eine detaillierte Information über den aktuellen Beladungszustand des Fahrzeuges. Die gewichtsmäßige Verteilung der Zuladung über die Ausdehnung des Fahrzeuges wir mit der Beladungsanzeige anschaulich visuell dargestellt. Die geometrische Ausgestaltung der Beladungsanzeige ist so ausgestaltet, dass der Fahrer die gewichtsmäßige Verteilung der Zuladung in einer Draufsicht auf das Fahrzeug erhält. Die Ausrichtung des Fahrzeuges ist eindeutig in der Darstellung zu erkennen. Der rechte vordere Quadrant der Beladungsanzeige zeigt beispielsweise die gewichtsmäßige Belastung, die Radlast, des vorderen rechten Rades und der linke hintere Quadrant die gewichtsmäßige Belastung des linken hinteren Rades des Fahrzeuges an. Die Beladung des Fahrzeuges kann dadurch effektiv und zügig durchgeführt werden, wobei eine ungewollte Überladung des Fahrzeugs vermieden werden kann. Ein überladenes Fahrzeug weist ein kritisches Fahrdynamikverhalten auf, was sich beispielsweise in einem speziellen und schwer zu kontrollierenden Brems- und Eigenlenkverhalten des Fahrzeuges äußert. Der Fahrer kann mittels der Beladungsanzeige den Schwerpunkt der Zuladung während des Beladens zu jedem Zeitpunkt in geeigneter Weise verschieben, so dass das Fahrzeug im beladenen Zustand eine optimale Verteilung seiner Zuladung bzgl. der Fahrdynamik des Fahrzeuges aufweist. Ist das Fahrzeug nur teilweise beladen und kann eine ausgeglichene Verteilung der Zuladung beispielsweise aufgrund dessen räumlicher Ausgestaltung nicht erreicht werden, so erhält der Fahrer über die Beladungsanzeige einen Hinweis dafür, wie sich das fahrdynamische Verhalten des Fahrzeuges bedingt durch die vorliegende Zuladung gegenüber einer ausgeglichenen Verteilung der Zuladung verändert hat. Der Fahrer wird dadurch nicht überrascht und kann sich durch ein geeignetes persönliches Fahrverhalten auf diese Situation einstellen. Die Beladungsanzeige trägt damit unabhängig vom Beladungszustand des Fahrzeuges zu einem sicheren Betrieb des Fahrzeugs bzgl. seines fahrdynamischen Verhaltens bei.

In einer Ausgestaltung erfolgt die Anzeige der aktuellen Radlast in einer Farbdarstellung, wobei eine erste Farbe für einen Wert der aktuellen Radlast unterhalb eines vorgegebenen Grenzwertes für eine maximale Radlast, eine zweite Farbe für einen Wert der aktuellen Radlast gleich dem vorgegebenen Grenzwert und eine dritte Farbe für einen Wert der aktuellen Radlast oberhalb des vorgegebenen Grenzwertes vorgesehen ist. Die Farbdarstellung erweist sich als besonders zweckmäßig und hilfreich während des Arbeitsvorganges des Beladens. Ist die aktuelle Radlast für ein bestimmtes Rad zu groß, so kann die Überlast beispielsweise durch ei rotes Signal im entsprechenden Quadranten angezeigt werden. Eine zulässige Beladung würde durch ein grünes Signal angezeigt werden und beim Erreichen des vorgegebenen Grenzwertes für die maximale Radlast würde ein gelbes Signal anzeigen, dass die maximal zuladbare Last für das entsprechende Rad erreicht ist.

Insbesondere kann die Beladungsanzeige eine Anzeige mit einer Farbdarstellung für ein aktuelles Gesamtgewicht des Fahrzeugs aufweisen. Dabei ist es von Vorteil, wenn die Anzeige für das Gesamtgewicht zentral in der Beladungsanzeige angeordnet ist. Die Anzeige des aktuelles Gesamtgewicht des Fahrzeuges ist ein wichtiger Parameter zur Beschreibung des Beladungszustandes des Fahrzeuges. Das aktuelle Gesamtgewicht wird mittels eines Integrations-Algorithmus aus den einzelnen Radlasten des Fahrzeuges bestimmt. Die zentrale Anordnung bringt zum Ausdruck und verdeutlicht, dass es sich beim aktuellen Gesamtgewicht nicht um die Darstellung einer einzelnen Radlast handelt, sondern um einen das Gesamtfahrzeug beschreibenden Parameter.

Vorzugsweise ist die Beladungsanzeige als analoge Füllbalkendarstellung für jedes Rad ausgeführt. Diese stellt den aktuellen Beladungszustand durch die Länge des gefüllten Balkens und die noch mögliche Beladung bis zur maximalen Radlast durch die Länge des nicht ausgefüllten Balkens dar. Idealerweise sind die Füllbalken in der Anzeige für die jeweilige maximale Radlast gleich lang. Bei einem Minivan mit vier Rädern entspricht ein Füllbalken beispielsweise dem Feld einer der vier Quadranten in der bereits beschriebenen Farbfelddarstellung. Wird die maximale Radlast überschritten, kann der Wert der Überschreitung durch eine entsprechende Überlänge des Füllbalkens dargestellt werden. Mit Hilfe dieser Füllbalkendarstellung können Beladungsreserven und Beladungsüberschreitungen genau und zügig abgelesen werden. Diese Füllbalkendarstellung kann durch eine digitale Zahlenwertdarstellung innerhalb oder außerhalb des Füllbalkens ergänzt werden, die bei geeigneten und hinreichend genauen Übertragungselementen vom Rad bis zur Anzeige entsprechend genaue Daten über die jeweilige Radlast oder Achslast vorteilhaft anzeigt.

In einer weiteren Ausgestaltung ist die Beladungsanzeige in einem Armaturenbereich und/oder im Zuladungsbereich des Fahrzeuges angeordnet und/oder weist eine portable Ausgestaltung auf. Für kleinere Kraftfahrzeuge, insbesondere für Personenkraftwagen, ist eine Beladungsanzeige im Armaturenbereich ausreichend. Für größere Fahrzeuge, insbesondere für Kleintransporter und Lastwagen mittlerer Größe, könnte eine im Zuladungsbereich des Kraftfahrzeuges stationär angeordnete Beladungsanzeige vorgesehen sein. Ein unbequemes häufiges Aufsuchen des Fahrerstandes während des Beladens wird dadurch vermieden. Für große Lastkraftwagen könnte auch eine portable Beladungsanzeige vorgesehen sein, welche die den Lastkraftwagen beladende Person mit sich führt. Eine gegebenenfalls vom Beladungsort entfernt angebrachte Beladungsanzeige muss nicht mehr ständig aufgesucht werden. Die Beladungsanzeige kann sich immer dort befinden, wo die Zuladung gegenwärtig erfolgt.

Weitere vorteilhafte Ausgestaltungen der Erfindung sind in den Unteransprüchen wiedergegeben.

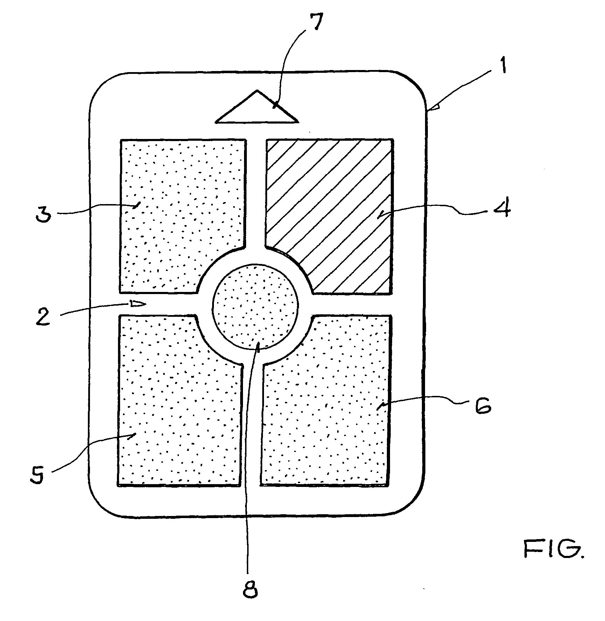

Die Erfindung wird anhand eines Ausführungsbeispiels in der einzigen Figur näher erläutert, wobei die Figur eine Beladungsanzeige für einen aktuellen Beladungszustand eines Fahrzeuges in schematischer Darstellung zeigt.

Eine in der Figur dargestellte Beladungsanzeige 1 zeigt in einer Mehrquadrantendarstellung 2, welche in diesem Ausführungsbeispiel die vier Quadranten 3 bis 6 umfasst, einen aktuellen Beladungszustand eines nicht weiter dargestellten Fahrzeuges an. Die Darstellung der Beladungsanzeige 1 ist so gewählt, dass das Fahrzeug in einer Draufsicht veranschaulicht wird, wobei eine Vorderseite des Fahrzeuges bzw. seine Fahrtrichtung durch einen Pfeil 7 beschrieben wird. In jedem Quadranten 3 bis 6 wird jeweils eine aktuelle gewichtsbedingte Radlast für jeweils ein Rad des Fahrzeuges angezeigt, wobei die Quadranten 3 bis 6 entsprechend der Radposition im Fahrzeug angeordnet sind. Der rechte vordere Quadrant 4 der Beladungsanzeige 1 veranschaulicht beispielsweise die Radlast des rechten vorderen Rades und der linke hintere Quadrant 5 die Radlast des linken hinteren Rades des Fahrzeuges.

Zur Ermittlung der jeweiligen Radlast im Fahrzeug wird für jedes Rad des Fahrzeuges die aktuelle gewichtsbedingte Radlast im Bereich einer Radaufhängung erfasst. Wenn das Fahrzeug beispielsweise mehr als zwei Achsen umfasst oder zusätzlich mit einen Anhänger versehen ist, so kann die Beladungsanzeige mehr Quadranten 3 bis 6, insbesondere sechs oder acht Quadranten 3 bis 6 aufweisen, um zusätzlich den Beladungszustand der weiteren Achse oder den Beladungszustand des Anhängers anzuzeigen. Der Beladungszustand des Anhängers kann alternativ auch mit den vier Quadranten 3 bis 6 dargestellt werden, wenn eine Umschaltung des Betriebsmodus so erfolgt, dass in einem ersten Betriebsmodus der Beladungszustand des Fahrzeugs und in einem zweiten Betriebsmodus der Beladungszustand des Anhängers dargestellt wird. Zwei auf einer Seite einer Achse angeordnete Räder werden nur mit einem Sensor zur Erfassung der Radlast ausgewertet. Als Sensoren zur Erfassung der Radlast sind beispielsweise Piezoelemente angedacht, mit welchen eine Sensierung kostengünstig zu realisieren ist. Für eine eindeutige Veranschaulichung der Ausrichtung des Fahrzeuges mir der Beladungsanzeige 1 können anstelle des Pfeils 7 auch Komponenten des Fahrzeuges in der Beladungsanzeige 1 kennzeichnend angedeutet sein, beispielsweise Außenrückspiegel, Scheinwerfer oder Rückleuchten des Fahrzeuges.

Zusätzlich weist die Beladungsanzeige 1 eine Anzeige 8 für ein aktuelles Gesamtgewicht des Fahrzeuges auf, wobei die Anzeige 8 für das Gesamtgewicht zentral in der Beladungsanzeige 1 angeordnet ist. Die Anzeige kann auch woanders in der Beladungsanzeige 1 angeordnet sein oder auch in einer vereinfachten Ausführungsform der Beladungsanzeige 1 gar nicht vorgesehen sein.

Die Darstellung der aktuellen Radlast in den Quadranten 3 bis 6 erfolgt in diesem Ausführungsbeispiel in einer Farbdarstellung, wobei eine erste Farbe, beispielsweise grün und zur Veranschaulichung in der Figur als gepunktete Fläche dargestellt, für einen Wert der aktuellen Radlast unterhalb eines vorgegebenen Grenzwertes für eine maximale Radlast, eine zweite Farbe, beispielsweise gelb, für einen Wert der aktuellen Radlast gleich dem vorgegebenen Grenzwert und eine dritte Farbe, beispielsweise rot und zur Veranschaulichung in der Figur als schraffierte Fläche dargestellt, für einen Wert der aktuellen Radlast oberhalb des vorgegebenen Grenzwertes vorgesehen ist. Für die Anzeige 8 für das aktuelle Gesamtgewicht des Fahrzeuges kann dieselbe farbliche Darstellungsform gewählt werden, wobei hier als Schwelle für die Auswahl der Signalfarbe das zulässige maximale Gesamtgewicht vorgesehen ist. Der in der Figur als Beispiel dargestellte Beladungszustand zeigt grüne Quadranten 3, 5, 6 und einen roten Quadranten 4. Das linke vordere Rad und die beiden hinteren Räder sind daher gewichtsmäßig nicht überbelastet, während auf dem rechten vorderen Rad, veranschaulicht durch den Quadranten 4, ein zu großes Gewicht lastet. Die Zuladung müsste für eine günstige Anordnung bzgl. der Fahrdynamik des Fahrzeuges in eine hintere und zentralere Position verschoben werden. Das Gesamtgewicht liegt unter dem zulässigen maximalen Gesamtgewicht, da die dem aktuellen Gesamtgewicht entsprechende Anzeige 8 ein grünes Signal anzeigt.

Die Anzeige der aktuellen Radlast oder des Gesamtgewichts kann aber auch eine andere Darstellungsform aufweisen, beispielsweise in Form einer prozentualen Darstellung in Bezug auf den jeweiligen Grenzwert. Denkbar ist hierfür eine Balkendarstellung oder eine Darstellung in Scheibenform für den jeweiligen Quadranten 3 bis 6 und/oder die Anzeige 8. Aber auch andere Graphik- oder Symboldarstellungen sind einsetzbar.

Wenn der Wert für die aktuelle Radlast wenigstens eines Rades gleich und/oder größer als der vorgegebene Grenzwert für die maximale Radlast ist und/oder wenn der Wert für das aktuelle Gesamtgewicht des Fahrzeugs das zulässige Gesamtgewicht des Fahrzeugs überschreitet, kann ein akustischer Warnhinweis ertönen. Der Fahrer erhält dadurch auch dann einen Warnhinweis, wenn er sich nicht in unmittelbarer Nähe der Beladungsanzeige 1 befindet, wodurch ein komfortables Zuladen gewährleistet ist.

Die Beladungsanzeige 1 kann in einem Armaturenbereich und/oder in einem Zuladungsbereich des Fahrzeuges angeordnet sein. Ebenso kann die Beladungsanzeige 1 portabel ausgestaltet sein, wodurch eine flexible Beladung des Fahrzeuges ermöglicht wird.

Die erfindungsgemäße Beladungsanzeige 1 für den aktuellen Beladungszustand des Fahrzeuges informiert zu jedem Zeitpunkt der Beladung des Fahrzeuges über die aktuelle Gewichtsverteilung. Eine gewichtsmäßige Überbelastung wird sofort bzgl. ihres Ortes angezeigt und eine entsprechende Umverteilung der Zuladung kann umgehend erfolgen, wodurch eine zeitoptimierte Beladung des Kraftfahrzeuges erreicht wird. Mit der Kenntnis der aktuellen Gewichtsverteilung, unabhängig davon ob das Fahrzeug vollständig oder nur teilweise beladen ist, kann der Fahrer sein fahrdynamisches Verhalten bewusst an den vorliegenden Beladungszustand anpassen. Die Verkehrssicherheit wird dadurch entscheidend erhöht.

## Patentansprüche

1. Beladungsanzeige (1) für einen aktuellen Beladungszustand eines Fahrzeuges, wobei für jedes Rad des Fahrzeuges eine aktuelle gewichtsbedingte Radlast im Bereich einer Radaufhängung erfasst wird.
**dadurch gekennzeichnet,**
**dass** die Beladungsanzeige (1) eine Mehrquadrantendarstellung (2) aufweist, wobei in jedem Quadranten (3 bis 6) die aktuelle Radlast für jeweils ein Rad angezeigt ist und die Quadranten (3 bis 6) entsprechend der Radposition im Fahrzeug angeordnet sind.

2. Beladungsanzeige (1) nach Anspruch 1,
**dadurch gekennzeichnet,**
**dass** die Anzeige der aktuellen Radlast für jeden Quadranten (3 bis 6) in einer Farbdarstellung erfolgt, insbesondere eine erste Farbe für einen Wert der aktuellen Radlast unterhalb eines vorgegebenen Grenzwertes für eine maximale Radlast, eine zweite Farbe für einen Wert der aktuellen Radlast gleich dem vorgegebenen Grenzwert und eine dritte Farbe für einen Wert der aktuellen Radlast oberhalb des vorgegebenen Grenzwertes vorgesehen ist.

3. Beladungsanzeige (1) nach Anspruch 1,
**dadurch gekennzeichnet,**
**dass** die Anzeige der aktuellen Radlast für jeden Quadranten (3 bis 6) in einer Zahldarstellung als prozentualer Anteil eines vorgegebenen Grenzwertes für eine maximale Radlast erfolgt.

4. Beladungsanzeige (1) nach Anspruch 1,
**dadurch gekennzeichnet,**
**dass** die Anzeige der aktuellen Radlast für jeden Quadranten (3 bis 6) in einer Graphikdarstellung, insbesondere in einer Füllbalkendarstellung, oder Symboldarstellung erfolgt.

5. Beladungsanzeige (1) nach Anspruch 1,
**dadurch gekennzeichnet,**
**dass** ein akustischer Warnhinweis ertönt, wenn der Wert für die aktuelle Radlast gleich und/oder größer als ein vorgegebenen Grenzwertes für eine maximale Radlast ist.

6. Beladungsanzeige (1) nach Anspruch 1,
**dadurch gekennzeichnet,**
**dass** die Beladungsanzeige (1) eine Anzeige mit einer Farbdarstellung für ein aktuelles Gesamtgewicht des Fahrzeuges aufweist.

7. Beladungsanzeige (1) nach Anspruch 6,
**dadurch gekennzeichnet,**
**dass** ein akustischer Warnhinweis ertönt, wenn der Wert für das aktuelle Gesamtgewicht des Fahrzeuges das zulässige Gesamtgewicht des Fahrzeuges überschreitet.

8. Beladungsanzeige (1) nach Anspruch 6,
**dadurch gekennzeichnet,**
**dass** die Anzeige (8) für das aktuelle Gesamtgewicht des Fahrzeuges zentral in der Beladungsanzeige angeordnet ist.

9. Beladungsanzeige (1) nach Anspruch 1,
**dadurch gekennzeichnet,**
**dass** die Beladungsanzeige (1) in einem Armaturenbereich und/oder in einem Zuladungsbereich des Fahrzeuges angeordnet ist und/oder eine portable Ausgestaltung aufweist.

10. Beladungsanzeige (1) nach Anspruch 1,
**dadurch gekennzeichnet,**
**dass** wenn das Fahrzeug einen Anhänger aufweist, die Beladungsanzeige zusätzlich oder alternativ den Beladungszustand des Anhängers anzeigt.
